# EUROPEAN PATENT APPLICATION

(11) **EP 2 857 135 A1**
(43) Date of publication of application: **08.04.2015**
(21) Application number: 13004762.4
(22) Date of filing: 02.10.2013
(51) Int. Cl.: B23K 9/013, B23K 35/38, B23K 26/38

(54) **Method of cutting a workpiece and assist gas composition**

(71) Applicant: Linde Aktiengesellschaft, 80331 München (DE)
(72) Inventor: Scholz, Jürgen, 81379 München (DE); Fieret, Jim, Bell Hill, Hook Norton OX15 5PS (GB); Suckling, Peter, Tonbridge, Kent TN12 0SY (GB)

(57) **Abstract**

Method of cutting a metal or metal alloy workpiece with a laser beam or an arc utilising an assist gas composition for the laser beam or arc, wherein the assist gas composition comprises oxygen as its primary component, characterized in that the assist gas composition comprises a small proportion of a fuel gas.

## Description

### Technical field

The invention concerns a method for cutting metal or metal alloy workpieces with a laser beam or an arc utilizing an assist gas for said laser beam or arc, as well as an assist gas composition useful therein.

Laser cutting of steel with an oxygen assist gas, i. e. an assist gas comprising oxygen as its main component, is known. Herein, it is known to utilize the exothermic reaction of the oxygen with the metal or metal alloy, especially iron (in a steel) to enhance the cutting speed. It is known that achievable cutting speeds are directly related to oxygen purity of the assist gas. For example, with an oxygen purity of 99.95 % (i. e. the assist gas comprising at least 99.95 weight-% oxygen) for example, substantially higher cutting speeds can be achieved as compared to assist gases with oxygen purities of e.g. 99.5%. Be it noted that all percentages given in the following shall refer to volume-% (vol.-%). For the given examples, the lower oxygen purity results in a drop in achievable cutting speed of around one third.

The reason for this drop in cutting speed is usually an increased argon level, which constitutes a typical contaminant for oxygen, as oxygen is usually produced in a cryogenic air separation unit, wherein oxygen and argon have similar boiling points.

For laser cutting, the argon impurity concentration in the assist gas comprising oxygen as its main component increases as the assist gas travels deeper into the laser cut (i. e. below the surface of the workpiece to be cut). This is due to the fact that oxygen is consumed by the exothermic reaction with for example iron, while argon (an inert gas) is not. As thus the argon concentration increases towards the base of the cut, the reaction speed of the remaining oxygen with iron is reduced, whereby cutting speed is limited.

It is known to provide the possibility of higher cutting speeds by using higher purity oxygen as assist gas, for example with oxygen purity of above 99.95 %. However, such high purity oxygen is not readily available in all parts of the world, and is more expensive to provide.

It is an object of the invention to increase the cutting speed in laser cutting or arc cutting using an assist gas containing oxygen as its primary component, without having to increase the oxygen purity to levels, which are not readily available for example in some parts of the world.

This is achieved by providing a method according to claim 1, an assist gas composition according to claim 7 and a pressurized container according to claim 13.

By providing a small proportion of a fuel gas within an assist gas composition containing oxygen as its primary component, melt-shear removal efficiency can be significantly increased, which leads to an increased cutting speed. In other words, the assist gas composition essentially consists of oxygen and fuel gas.

Especially, the fuel gas will ignite when the assist gas reaches the hot section of the cut, whereby additional heat is produced, which expands the assist gas, whereby flow velocity is increased. This increased flow velocity leads to a marked improvement of melt-shear removal, which in turn leads an increased cutting speed.

Advantageous embodiments of the invention are the subject matter of the dependent claims.

Preferably, the assist gas composition comprises at least 95.0 vol.-%, 96.0 vol.-%, 97.0 vol.-%, 98.0 vol.-%, 99.0 vol.-%, 99.5 vol.-% or 99.9 vol.-% oxygen.

Depending on the oxygen content of the assist gas composition, the proportion of fuel gas can preferably be chosen to be at most 5.0 vol.-%, 4.0 vol.%, 3.0 vol.-%, 2.0 vol.-% 1.0 vol.-%, 0.5 vol.-% or 0,1 vol.-%. It must be made sure that the proportion of fuel gas remains below the explosion limit, taking into account that the main component of the assist gas composition is oxygen.

Preferably, the fuel gas composition comprises at least one of the following components: acetylene, hydrogen, methane, ethane, propane, butane, ethylene, propylene, butene, cyclopropane.

It is advantageous if the assist gas composition comprises at most 5.0 vol.-%, 4.0 vol.-%, 3.0 vol.-%, 2.0 vol.-%, 1.0 vol.-%, 0.5 vol.-% or 0.1 vol.-% fuel gas

Expediently, the assist gas composition can comprise at least 0.1 vol.-%, 0.2 vol.-%, 0.3 vol.-%, 0.4 vol.-%, 0.5 vol.-%, 1.0 vol.-%, 2.0 vol.-%, 3.0 vol.-%, 4.0 vol.-% or 5.0 vol.-% of fuel gas.

Advantageous embodiments of the invention will now be further described.

According to the invention, a proportion of fuel gas is added to the primary component of the assist gas composition, i. e. oxygen. As mentioned above, this proportion must lie below the explosion limit for safe handling.

An additional factor, which can be utilized to contribute to an increased flow rate, is to choose a fuel gas which, when reacting with oxygen, results in a larger number of molecules of combustion products as compared to the original molecules of fuel gas and oxygen before combustion. A preferred fuel gas in this connection is ethylene. Here, the reaction with oxygen takes place according to the formula

2C₂H₄ + 5O₂ => 4CO₂ + 4H₂O + combustion heat.

Thus, before combustion there are seven molecules present, and after combustion eight molecules. In this case, the increase in the number of molecules leads to an expansion of the assist gas during combustion and thus to an increased flow rate.

As mentioned above, the explosion limit for safe handling must be taken in to account when choosing an expedient proportion of fuel gas within the assist gas composition. On the other hand, it is advantageous to choose this proportion as large as possible, as the larger the proportion of fuel gas in the assist gas composition, the more additional heat can be generated.

For the preferred fuel gases, the following explosion limits for safe handling within pure oxygen are given purely as examples (be it noted that these percentages can, theoretically, be somewhat higher in case of assist gases with smaller percentages/concentrations of pure oxygen and can also vary with temperature and/or pressure): Acetylene: 2.5 vol.-%, hydrogen: 4.0 vol.-%, methane: 5.1 vol.%, ethane: 3.0 vol.-%, propane: 2.3 vol.-%, butane: 1.8 vol.%, ethylene: 3.0 vol.-%, propylene: 2.1 vol.-%, butane: 1.7 vol.-%, cyclopropane: 2.5 vol.-%.

By using assist gas compositions comprising fuel gas or fuel gases as described above, cutting speeds for laser cutting and arc cutting for example in steel can be significantly enhanced, without the need of providing higher purity oxygen, which is more expensive and often not readily commercially available in all parts of world.

While laser cutting is a preferred application for the invention, it can be used in other cutting applications where the energy to initiate the cutting process comes from another energy source, for example an arc, as mentioned above, or the combustion of a fuel gas with pure oxygen, or nitrous oxide.

## Claims

1. Method of cutting a metal or metal alloy workpiece with a laser beam or an arc utilising an assist gas composition for the laser beam or arc, wherein the assist gas composition comprises oxygen as its primary component, **characterized in that** the assist gas composition comprises a small proportion of a fuel gas.

2. Method according to claim 1, wherein the assist gas composition comprises at least 95.0 vol.-%, 96.0 vol.-%, 97.0 vol.-%, 98.0 vol.-%, 99.0 vol.-%, 99.5 vol.-% or 99.9 vol.-% oxygen.

3. Method according to claim 1 or claim 2, wherein the assist gas composition comprises at most 5.0 vol.-%, 4.0 vol.%, 3.0 vol.-%, 2.0 vol.-%, 1.0 vol.-%, 0.5 vol.-% or 0.1 vol.-% fuel gas.

4. Method according to any one of the preceding claims, wherein the assist gas composition comprises at least 0.1 vol.-%, 0.2 vol.-%, 0.3 vol.-%, 0.4 vol.-%, 0.5 vol.-%, 1.0 vol.-%, 2.0 vol.-%, 3.0 vol.-%, 4.0 vol.-% or 5.0 vol.-% of fuel gas.

5. Method according to any one of the preceding claims, wherein the fuel gas comprises at least one of the following components: acetylene, hydrogen, methane, ethane, propane, butane, ethylene, propylene, butene, cyclopropane.

6. Method according to claim 5, wherein the fuel gas comprises at most 2.5 vol.-% acetylene or 4.0 vol.-% hydrogen or 5.1 vol.-% methane or 3.0 vol.-% ethane or 2.3 vol.-% propane or 1.8 vol.-% butane or 3.0 vol.-% ethylene or 2.1 vol.-% propylene or 1.7 vol.-% butane or 2.5 vol.-% cyclopropane.

7. Assist gas composition for laser or arc cutting of a metal or metal alloy workpiece, comprising oxygen as its primary component and a small proportion of a fuel gas.

8. Assist gas composition according to claim 7, comprising at least 95.0 vol.-%, 96.0 vol.-%, 97.0 vol.-%, 98.0 vol.-%, 99.0 vol.-%, 99.5 vol.-% or 99.9 vol.-% of oxygen.

9. Assist gas composition according to claim 7 or claim 8, comprising at most 5.0 vol.-%, 4.0 vol.-%, 3.0 vol.-%, 2.0 vol.-%, 1.0 vol.-%, 0.5 vol.-% or 0.1 vol.-% of fuel gas.

10. Assist gas composition according to any one of claims 7 to 9, comprising at least 0.1 vol.-%, 0.2 vol.-%, 0.3 vol.-%, 0.4 vol.-%, 0.5 vol.-%, 1.0 vol.-%, 2.0 vol.-%, 3.0 vol.-%, 4.0 vol.-% or 5.0 vol.-% of fuel gas.

11. Assist gas composition according to any one of claims 7 to 10, wherein the fuel gas comprises at least one at the following components: acetylene, hydrogen, methane, ethane, propane, butane, ethylene, propylene, butene, cyclopropane.

12. Assist gas composition according to claim 11, wherein the fuel gas comprises at most 2.5 vol.-% acetylene or 4.0 vol.-% hydrogen or 5.1 vol.-% methane or 3.0 vol.-% ethane or 2.3 vol.-% propane or 1.8 vol.-% butane or 3.0 vol.-% ethylene or 2.1 vol.-% propylene or 1.7 vol.-% butane or 2.5 vol.-% cyclopropane.

13. Pressurized container containing an assist gas composition according to any one of claims 7 to 12.
